(19) Europäisches Patentamt
European Patent Office
Office européen des brevets

(11) **EP 2 921 906 A1**

(12) **EUROPÄISCHE PATENTANMELDUNG**

(43) Veröffentlichungstag:
**23.09.2015 Patentblatt 2015/39**

(51) Int Cl.:
***G03B 35/10*** (2006.01)   ***G03B 5/00*** (2006.01)

(21) Anmeldenummer: **15154870.8**

(22) Anmeldetag: **12.02.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.02.2014 EP 14000497**

(71) Anmelder: **VKM 3D Cinema Technologies Limited 1070 Nicosia (CY)**

(72) Erfinder: **Perepichay, Vadim V.
Moscow 127206 (RU)**

(74) Vertreter: **Jeck, Anton
Klingengasse 2
71665 Vaihingen/Enz (DE)**

(54) **Optoelektronisches Modul für Raumbildaufnahmen**

(57) Das optoelektronische Modul ist in der Gerätetechnik für Raumbildaufnahmen einsetzbar und weist eine Fassung auf, in der achsparallel zwei identische optische Einheiten auf einer beweglichen Auflageplatte angeordnet sind. Die optischen Einheiten sind mit einem Servoantrieb gekoppelt, um eine Stereoaufnahmebasis zu verstellen, sowie mit einem anderen Servoantrieb gekoppelt, um die Blendenwerte in beiden optischen Einheiten zu verändern. Dabei ist die genannte Auflageplatte mit dem Servoantrieb verbunden, um die Objektivschärfe einzustellen. Die Steuereingänge aller Servoantriebe sind mit Ausgängen eines Prozessrechners verbunden, welcher die Kennwerte für die Raumbildaufnahme vorgibt. Das rechte und das linke Einzelbild werden auf einen Sensor projiziert. Der Sensor sendet ein elektronisches Signal an einen Umsetzer und danach an eine Signalspeichereinrichtung. Der technische Effekt ist die Erhöhung der Genauigkeit und die Vermeidung von subjektiven Faktoren bei der Herstellung von Bedingungen für die Raumbildaufnahme mit Hilfe eines Prozessrechners sowie die Sicherstellung von Fernsteuerbarkeit (darunter Fernfunksteuerbarkeit) aller Kennwerte.

Fig.1

**Beschreibung**

Die Erfindung betrifft ein optoelektronisches Modul für Raumbildaufnahmen nach dem Oberbegriff des Anspruchs 1.

Die Erfindung ist in der Gerätetechnik für Raumbildaufnahmen (Stereofilmaufnahmen), insbesondere für Raumbildaufnahmen in der Filmproduktion einsetzbar.

Aus der Druckschrift SU 92980, Bernstein N.D., 1953, SU 1053329, Gorelov L.V., 1983, sind optische Einrichtungen bekannt, mit denen ein stereoskopisches Bild (Raumbild) erzeugt werden kann.

Bekannt ist ein Stereofilmobjektiv mit einer Objektivfassung. In der Objektivfassung sind dabei zwei identische optische Einheiten angeordnet. Die optischen Einheiten sitzen achsparallel auf einer Auflageplatte und sind mit einem Antrieb gekoppelt, um die Stereoaufnahmebasis mit dem Antrieb zu verstellen. Der Antrieb dient zur Veränderung der Blendenwerte in beiden optischen Einheiten.

Der Mangel dieser technischen Lösung ist, dass dabei nur eine Handbedienung möglich ist. Somit erfolgt die Bedienung ungenau und hängt von subjektiven Faktoren und Kenndaten von mechanischen gravierten Skalen ab. Dabei müssen spezielle Kenndatentabellen benutzt werden, um den Rampenabstand zu ermitteln.

Aus der Druckschrift JP H06 105339 A ist ein optoelektronisches Modul für Raumbildaufnahmen bekannt, welches eine Fassung aufweist, in der achsparallel zwei identische optische Einheiten auf einer beweglichen Auflageplatte angeordnet sind. Weiter sind die optischen Einheiten mit einem Servoantrieb gekoppelt um die Stereoaufnahmebasis zu verstellen. Zudem ist die Auflageplatte mit einem weiteren Servoantrieb verbunden, um die Objektschärfe einzustellen, wobei die Steuereingänge aller Servoantriebe mit Ausgängen eines Prozessrechners verbunden sind und der Prozessrechner die Kennwerte für die Raumbildaufnahme vorgibt. Dabei erzeugt der Prozessrechner Steuersignale je nach einem Signal, welches von einem Fernbedienungspult ankommt. Weiter weist das optoelektronische Modul für jede der beiden optischen Einheiten einen Bildsensor auf, deren Signale über einen Umsetzer umgesetzt in eine Signalspeichereinheit für die weitere Verarbeitung gelangen.

Es ist Aufgabe der Erfindung, ein optoelektronisches Modul mit einer erhöhten Genauigkeit zu entwickeln sowie subjektive Faktoren bei der Schaffung von bestimmten Bedingungen für eine Raumbildaufnahme zu vermeiden, indem der Rampenabstand mit Hilfe eines Prozessrechners gewählt wird, um die Fernsteuerbarkeit, darunter auch die Fernfunksteuerbarkeit, aller Kenndaten sicherzustellen.

Die gestellte Aufgabe wird durch die Merkmale des Anspruchs 1 gelöst.

Der technische Effekt wird wie folgt erreicht.

Das optoelektronische Modul für Raumbildaufnahmen enthält eine Fassung. In der Fassung sind achsparallel zwei identische optische Einheiten auf einer beweglichen Auflageplatte angeordnet. Die optischen Einheiten sind mit zwei Servoantrieben gekoppelt. Der eine Servoantrieb ist vorgesehen, um die Stereoaufnahmebasis zu verstellen. Der andere Servoantrieb dient dazu, den Blendenwert in beiden optischen Einheiten zu verändern. Die genannte Auflageplatte ist mit einem weiteren Servoantrieb verbunden, um die Objektschärfe einzustellen. Die Steuereingänge aller Servoantriebe sind mit Ausgängen eines Prozessrechners verbunden, welcher die Kennwerte für eine Raumbildaufnahme vorgibt. Im Speziellen erzeugt der Prozessrechner Steuersignale für die Servoantriebe je nach dem Signal, das von einem Fernbedienungspult ankommt, wobei das Signal von einem Sensor zum Erfassen von zwei projizierten Einzelbildern der beiden optischen Einheiten kommt und über einen Umsetzer umgesetzt in eine Signalspeichereinheit für die weitere Verwendung gelangt. Zwei projizierte Einzelbilder am festen Sensor sind waagerecht bewegbar. Dadurch ist die Möglichkeit geschaffen, die maximale Einzelbildfläche aufrechtzuerhalten, wenn die Einzelbilder einander überdecken.

Durch die Verwendung von nur einem Sensor zum Erfassen von zwei projizierten Einzelbildern zweier optischer Einheiten kann sichergestellt werden, dass die beiden Einzelbilder eine identische Farbwiedergabe, einen identischen Kontrast sowie eine identische optische Dichte aufweisen. Dadurch, dass nur ein Sensor zum Erfassen von zwei projizierten Einzelbildern verwendet wird, kann ferner die Aufnahme mit nur einer Aufnahmeeinrichtung erfolgen, die mit einer anwendungsspezifisch entwickelten, insbesondere austauschbar ausgebildeten Einheit versehen werden kann, wobei die Einheit je zwei Aufnahmeobjektive sowie Blenden- und Einstellvorrichtungen aufweist, um simultan die beiden Aufnahmeobjektive zu steuern. Eine derartige Aufnahmeeinrichtung ist insbesondere für Stereo-Lupenaufnahmen, Zeitlupenaufnahmen oder Zeitrafferaufnahmen geeignet.

Das Wesen der Erfindung wird anhand einer Zeichnung näher erklärt. Die Zeichnung zeigt ein Übersichtsbild des optoelektronischen Moduls.

Das optoelektronische Modul für Raumbildaufnahmen enthält eine Fassung 1. In der Fassung 1 sind achsparallel zwei identische optische Einheiten 2 und 3 auf einer beweglichen Auflageplatte 9 angeordnet. Die optischen Einheiten 2 und 3 sind mit einem Servoantrieb 4 gekoppelt, um die Stereoaufnahmebasis zu verstellen, sowie mit einem Servoantrieb 5 gekoppelt, um den Blendenwert in beiden optischen Einheiten 2 und 3 zu verändern. Die Auflageplatte 9 ist mit einem Servoantrieb 5 gekoppelt, um die Objektschärfe einzustellen. Die Steuereingänge aller Servoantriebe 4, 5 und 6 sind mit Ausgängen eines Prozessrechners 7 verbunden, welcher die Kennwerte für die Raumbildaufnahme vorgibt. Der Prozessrechner 7 erzeugt Steuersignale je nach dem Signal, das von einem Fernbedienungspult 8 ankommt. Das Signal kommt von einem Sensor 10 zu einem Umsetzer 11, ist in ein Videosignal umgesetzt und gelangt in eine Signalspeichereinrichtung 12.

Funktionsweise des optoelektronischen Moduls

Die Voreinstellung der Kennwerte (Kalibrierung) erfolgt automatisch mit Hilfe eines Prozessrechners 7. Danach ist das Objektiv betriebsbereit.

Nach Abschluss der Kalibrierung ist auf dem an der Fassung 1 des Moduls angeordneten Bildschirm die Information mit allen Kennwerten bezüglich der Filmaufnahme angezeigt. Dabei handelt es sich um die Blendenwerte, den Schärfeeinstellungsabstand und den Rampenabstand, welche der Bediener je nach den Aufnahmebedingungen vorgibt. Dabei kann zum Beispiel die Stereoaufnahmebasis mittels des vom

Prozessrechner 7 gesteuerten Servoantriebs 4 verändert sein und zwar nach folgender Rechenformel:

$$Lp = Bf/Hp,$$

wobei:

Lp    der Rampenabstand (m),
B      die Stereoaufnahmebasis (mm),
f       die Brennweite des Stereoobjektivs für die Filmaufnahme (mm),
H      der Rampenindex und
P      die Unendlichkeitsparallaxe des Stereokinematographie-Systems (mm) sind.

Unter Rampenabstand wird hierbei der Abstand zwischen den Knotenpunkten der optischen Einheiten des Stereoobjektivs und der Rampenebene verstanden. So ist es bei Stereoaufnahmen üblich, den Rampenabstand sowie den Schärfeeinstellungsabstand zur Oberfläche der Filmbahn zu messen. Der Rampenabstand ist eine der Hauptkenngrößen der Raumbildaufnahme (Stereoaufnahme), welche für jeden Aufnahmeplan bestimmt werden.

Unter dem Begriff Rampenindex wird weiter der Hypertrophie-Faktor oder der Verzerrungsfaktor der Tiefenübertragung verstanden. Bei der Raumbildaufnahme wird der Rampenindex für jeden Aufnahmeplan je nach der Rampenabstand-Größe eingestellt. Beispielsweise bedeutet ein Rampenindex der den Wert 1 hat, dass die Aufnahme in proportionalen Raumverhältnissen durchgeführt wird, wohingegen der Rampenindex, mit einem Wert ungleich 1 auf eine Aufnahme mit Hypertrophie der 3. Dimension hindeutet.

## Patentansprüche

**1.** Optoelektronisches Modul für Raumbildaufnahmen mit einer Fassung (1), in der achsparallel zwei identische optische Einheiten (2, 3) auf einer beweglichen Auflageplatte (9) angeordnet sind, wobei die optischen Einheiten (2, 3) mit einem Servoantrieb (4) gekoppelt sind, um die Stereoaufnahmebasis zu verstellen, sowie mit einem anderen Servoantrieb (6) gekoppelt sind, um die Blendenwerte in beiden optischen Einheiten (2, 3) zu verändern, die genannte Auflageplatte (9) mit einem Servoantrieb (5) verbunden ist, um die Objektschärfe einzustellen, wobei die Steuereingänge aller Servoantriebe (4, 5, 6) mit Ausgängen eines Prozessrechners (7) verbunden sind und der Prozessrechner (7) die Kennwerte für die Raumbildaufnahme vorgibt, wobei der Prozessrechner (7) Steuersignale je nach dem Signal erzeugt, das von einem Fernbedienungspult (8) ankommt, **dadurch gekennzeichnet, dass** das Signal von einem Sensor (10) zum Erfassen von zwei projizierten Einzelbildern der beiden optischen Einheiten (2,3) kommt und über einen Umsetzer (11) umgesetzt in eine Signalspeichereinheit (12) für die weitere Verwendung gelangt.

**2.** Optoelektronisches Modul nach Anspruch 1, **dadurch gekennzeichnet, dass** die Voreinstellung der Kennwerte automatisch mit Hilfe des Prozessrechners (7) erfolgt.

**3.** Optoelektronisches Modul nach Anspruch 1 oder 2, **dadurch gekennzeichnet, dass** die Stereoaufnahmebasis mittels des vom Prozessrechner (7) gesteuerten Servoantriebs (4) nach folgender Rechenformel erfolgt:

$$Lp = Bf/Hp,$$

wobei

Lp der Rampenabstand (m),
B die Stereoaufnahmebasis (mm),
f die Brennweite des Stereoobjektivs für die Filmaufnahme (mm),
H der Rampenindex und
P die Unendlichkeitsparallaxe des Stereokinematographie-Systems (mm) sind.

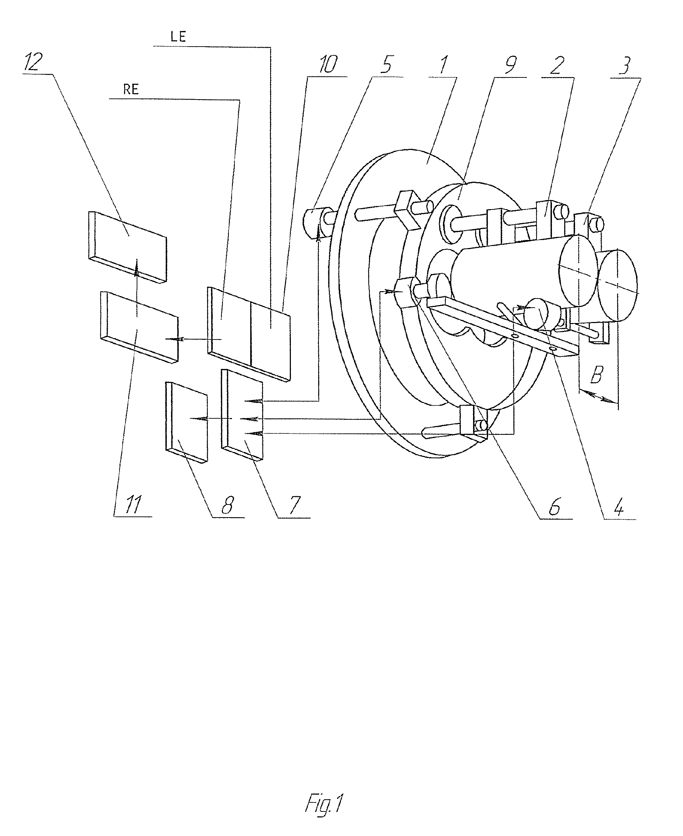

Fig.1

Europäisches
Patentamt

European
Patent Office

Office européen
des brevets

**EUROPÄISCHER RECHERCHENBERICHT**

Nummer der Anmeldung

EP 15 15 4870

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2011/043700 A1 (NON PROFIT FUND CINEMA AND TELEVISION ARTS GALLERY [RU]; BERDNIKOV EVG) 14. April 2011 (2011-04-14) * das ganze Dokument * ----- | 1-3 | INV. G03B35/10 G03B5/00 |
| Y | EP 2 381 305 A1 (INLIFE HANDNET CO LTD [CN]) 26. Oktober 2011 (2011-10-26) * Absätze [0013] - [0017]; Abbildungen 1,3 * ----- | 1-3 | |
| Y | JP H06 105339 A (TOSHIBA CORP) 15. April 1994 (1994-04-15) * Zusammenfassung; Abbildungen 1-4 * ----- | 1-3 | |
| Y | JP H02 260890 A (TOSHIBA CORP) 23. Oktober 1990 (1990-10-23) * Zusammenfassung; Abbildungen 1-4 * ----- | 1-3 | |
| Y | JP 2006 064874 A (SHARP KK) 9. März 2006 (2006-03-09) * Zusammenfassung; Abbildungen 1-4 * ----- | 1-3 | |
| Y | JP H08 304874 A (OLYMPUS OPTICAL CO) 22. November 1996 (1996-11-22) * Zusammenfassung; Abbildungen 1,2,3,4,5,6,15,23,24 * ----- | 1-3 | RECHERCHIERTE SACHGEBIETE (IPC) G03B |
| Y | US 2012/069152 A1 (KUSAKA HIROYA [JP]) 22. März 2012 (2012-03-22) * Absätze [0104] - [0132], [0133] - [0153]; Abbildungen 8-13,14-19 * ----- | 1,2 | |

Der vorliegende Recherchenbericht wurde für alle Patentansprüche erstellt

| Recherchenort | Abschlußdatum der Recherche | Prüfer |
|---|---|---|
| München | 14. August 2015 | Rückerl, Ralph |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 15 4870

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-08-2015

| Im Recherchenbericht angeführtes Patentdokument | Datum der Veröffentlichung | Mitglied(er) der Patentfamilie | Datum der Veröffentlichung |
|---|---|---|---|
| WO 2011043700 A1 | 14-04-2011 | RU 2009137200 A<br>WO 2011043700 A1 | 20-04-2011<br>14-04-2011 |
| EP 2381305 A1 | 26-10-2011 | EP 2381305 A1<br>KR 20110105830 A<br>WO 2010069169 A1 | 26-10-2011<br>27-09-2011<br>24-06-2010 |
| JP H06105339 A | 15-04-1994 | KEINE | |
| JP H02260890 A | 23-10-1990 | JP 2791092 B2<br>JP H02260890 A | 27-08-1998<br>23-10-1990 |
| JP 2006064874 A | 09-03-2006 | KEINE | |
| JP H08304874 A | 22-11-1996 | KEINE | |
| US 2012069152 A1 | 22-03-2012 | JP 2012090259 A<br>US 2012069152 A1 | 10-05-2012<br>22-03-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- SU 92980, Bernstein N.D.
- SU 1053329, Gorelov L.V.
- JP H06105339 A